# EUROPEAN PATENT APPLICATION

(11) **EP 4 783 090 A1**
(43) Date of publication of application: **29.07.2026**
(21) Application number: 24897018.8
(22) Date of filing: 28.08.2024
(51) Int. Cl.: G06Q 10/20

(54) **WORK ASSISTANCE SYSTEM**

(30) Priority: 28.11.2023 JP 2023200710
(71) Applicant: Mitsubishi Heavy Industries, Ltd., Chiyoda-ku Tokyo 100-8332 (JP)
(72) Inventor: SHIROTORI, Kento, Tokyo 100-8332 (JP); YAMAZAKI, Shinsuke, Tokyo 100-8332 (JP); TORIMOTO, Kazutaka, Nagoya-shi, Aichi 460-0008 (JP)
(74) Representative: Hoffmann Eitle
(86) International application number: PCT/JP2024/030699
(87) International publication number: WO 2025/115327

(57) **Abstract**

According to the present invention, a work assistance system that assists the work of a worker comprises a display unit that displays a work procedure for the work, an input unit for inputting the progress of the work according to the work procedure, and a control unit that performs data processing that records the progress of the work on the basis of input to the input unit. When a suspension operation for suspending the work is inputted to the input unit, the control unit performs data processing that records the progress of the work before the suspension and also performs suspension processing that makes the display unit display that the work has been suspended. When a resumption operation for resuming the work is inputted to the input unit, the control unit resumes the data processing that records the progress of the work.

## Description

### Technical Field

The present disclosure relates to a work assistance system.

### Background Art

In the related art, there has been known a system that allows a worker to easily refer to data effective for performing work in a wearable terminal worn on the worker's head (see, for example, PTL 1).

### Citation List

### Patent Literature

[PTL 1] Japanese Unexamined Patent Application Publication No. 2018-194914

### Summary of Invention

### Technical Problem

When the worker suspends the work and then resumes the work, it may be ambiguous how far the work has progressed, and the progress status of the work may not be understood.

Therefore, an object of the present disclosure is to provide a work assistance system that enables a worker to appropriately suspend and resume work.

### Solution to Problem

According to the present disclosure, there is provided a work assistance system that assists work performed by a worker, the work assistance system including: a display unit that displays a work procedure of the work; an input unit that inputs progress of the work in accordance with the work procedure; and a control unit that performs a data process of recording the progress of the work based on the input from the input unit, in which the control unit, when a suspension operation of suspending the work is input through the input unit, performs a data process of recording the progress of the work before the suspension and also performs a suspension process of displaying, on the display unit, that the work is suspended, and when a resumption operation of resuming the work is input through the input unit, resumes the data process of recording the progress of the work.

### Advantageous Effects of Invention

According to the present disclosure, it is possible for a worker to appropriately suspend and resume work.

### Brief Description of Drawings

FIG. 1 is a diagram of a work assistance system according to the present embodiment.
FIG. 2 is an explanatory diagram showing the work assistance system according to the present embodiment in a functional manner.
FIG. 3 is a flowchart of an example related to the work assistance system according to the present embodiment.
FIG. 4 is a flowchart of an example related to the work assistance system according to the present embodiment.
FIG. 5 is a diagram of a screen displayed on a display unit of the work assistance system.

### Description of Embodiments

Embodiments according to the present disclosure will be described in detail below with reference to the drawings. Note that this disclosure is not limited to the embodiment. In addition, components in the following embodiment include those that can be easily replaced by those skilled in the art or those that are substantially the same. Further, the components described below can be combined as appropriate, and in a case where there are a plurality of embodiments, the embodiments can also be combined.

### [Present Embodiment]

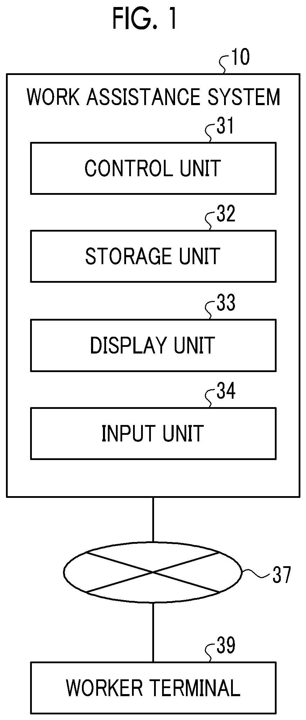

A work assistance system 10 according to the present embodiment is a system that assists a worker who performs maintenance work on an aircraft. The work assistance system 10 provides information related to the maintenance work to the worker or is used for recording work content of a work location. The work assistance system 10 may be used as a system that performs education and training for the maintenance work in addition to the actual work. The work assistance system 10 will be described with reference to FIG. 1.

### (Work Assistance System)

FIG. 1 is a diagram of the work assistance system according to the present embodiment. As shown in FIG. 1, the work assistance system 10 includes a control unit 31, a storage unit 32, a display unit 33, and an input unit 34. The work assistance system 10 may be a wearable terminal, a portable terminal, or a stationary terminal, and is not particularly limited. In addition, a worker terminal 39 is connected to the work assistance system 10 through a communication network 37. Although not shown, the worker terminal 39 has a display unit and an input unit, similar to the work assistance system 10, and can input information for recording work.

The control unit 31 includes, for example, an integrated circuit such as a central processing unit (CPU). The control unit 31 performs a data process related to the assistance for the maintenance work. The storage unit 32 is any storage device such as a semiconductor storage device or a magnetic storage device. The storage unit 32 stores information and the like generated by various types of data processes. The display unit 33 is, for example, a display device such as a liquid crystal display. The input unit 34 is, for example, an input device such as a keyboard and a mouse.

The work assistance system 10 presents information on planned maintenance work to the worker through the display unit 33. In addition, the work assistance system 10 generates information on the progress of the maintenance work and information on the record of the maintenance work by input of information on the results of the maintenance work by the worker. Then, the work assistance system 10 outputs the generated information on the results of the maintenance work to a work-record database (not shown).

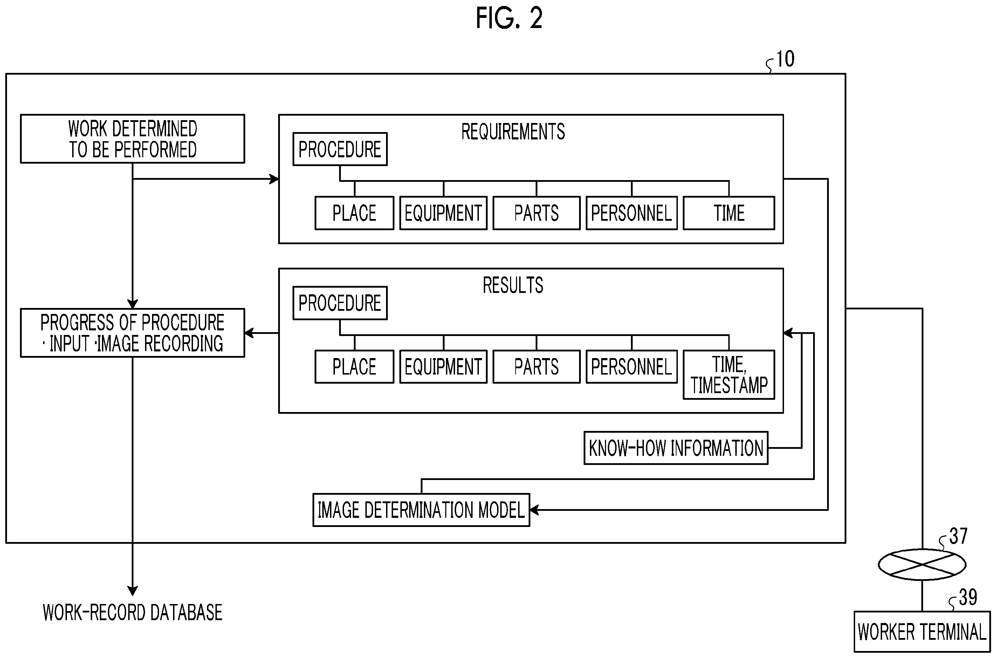

Next, an outline of functions of the work assistance system 10 will be described with reference to FIG. 2. FIG. 2 is an explanatory diagram showing the work assistance system according to the present embodiment in a functional manner. As shown in FIG. 2, the work assistance system 10 acquires work-request data (referred to as "request" in FIG. 2) which is data of the maintenance work to be performed. The work-request data is information for assisting the maintenance work, and is information on a resource in which a work procedure of the maintenance work, a place required for the maintenance work, equipment required for the maintenance work, parts required for the maintenance work, personnel for the maintenance work, and working time required for the maintenance work are associated with each other.

When the work assistance system 10 acquires the work-request data, the work assistance system 10 assists the maintenance work based on the work-request data. The work assistance system 10 presents the work procedure of the maintenance work to the worker through the display unit 33. In addition, the work assistance system 10 generates work-record data based on the information input by the worker, and outputs the generated work-record data to the work-record database.

In addition, the work assistance system 10 performs a suspension process of suspending the work during the maintenance work, and performs a resumption process of resuming the work during the suspension of the maintenance work.

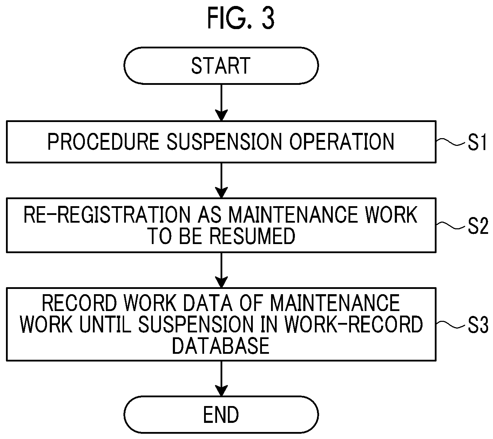

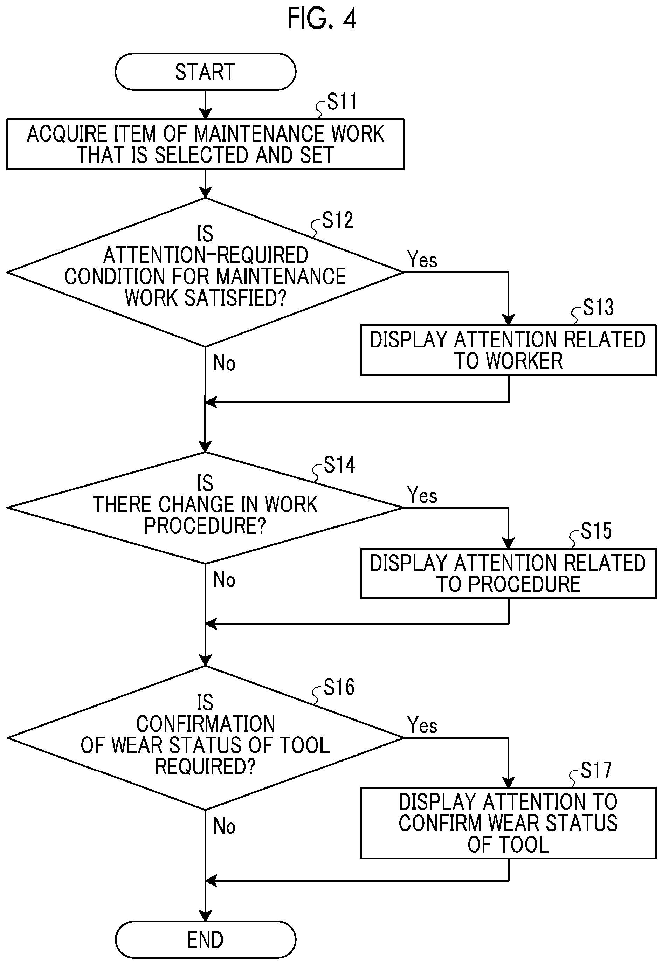

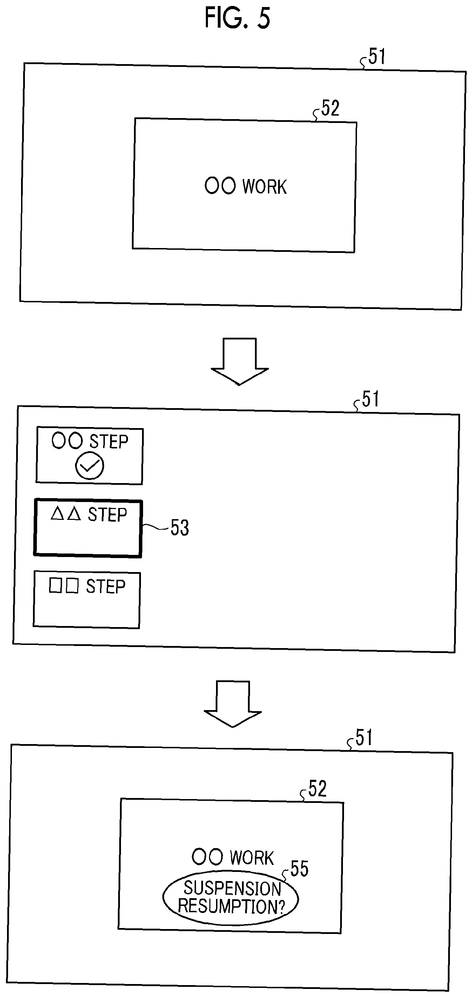

Next, the suspension process of the work of the work assistance system 10 will be described with reference to FIGS. 3 to 5. FIGS. 3 and 4 are flowcharts of an example related to the work assistance system according to the present embodiment. FIG. 5 is a diagram of a screen displayed on the display unit of the work assistance system.

As shown in FIG. 3, the control unit 31 of the work assistance system 10 receives a suspension operation of suspending the maintenance work through the input unit 34 during the maintenance work (step S1). In step S1, the worker performs the operation of suspending the work on the input unit 34, so that the control unit 31 starts the suspension process. When step S1 is executed, the control unit 31 performs re-registration as the maintenance work to be resumed (step S2). In step S2, re-registration is performed in the work management system that manages the progress of the maintenance work or the storage unit 32. Subsequently, the control unit 31 records the work-record data of the maintenance work until the suspension in the work-record database (step S3), and ends the suspension process.

When the resumption operation of resuming the maintenance work is input through the input unit 34 after the suspension of the maintenance work, the control unit 31 performs a resumption process of resuming the recording of the work-record data of the maintenance work.

In addition, in the suspension process shown in FIG. 3, the control unit 31 performs a display process shown in FIG. 5. The display process shown in FIG. 5 is a display process of causing the display unit 33 to display that the work is suspended. Specifically, during the maintenance work, the control unit 31 causes the display unit 33 to display a screen 51 related to the maintenance work. On the screen 51, a main item 52 indicating a work unit and a sub-item 53 indicating a step of the maintenance work associated with the main item 52 are displayed. The main item 52 is an item of the maintenance work to be performed. When the main item 52 is selected, the control unit 31 performs the assistance of the maintenance work by developing the sub-item 53 corresponding to the main item 52 along the work procedure. The sub-item 53 is an item corresponding to each step of the work procedure. The sub-item 53 is hidden when the suspension process is performed while being developed by selecting the main item 52.

The control unit 31 displays, when the maintenance work is started, the main item 52 as shown on the upper screen 51 of FIG. 5. When the main item 52 of the predetermined maintenance work is selected, the control unit 31 displays the sub-item 53 corresponding to the main item 52 as shown on the intermediate screen 51 of FIG. 5. When the suspension process of the maintenance work is performed, the control unit 31 hides the sub-item 53 and displays the main item 52 as shown on the lower screen 51 of FIG. 5. In this case, an icon 55 indicating that the suspension process is being performed may be displayed on the main item 52. As a result, the work assistance system 10 can visually indicate to the worker that the suspension process is performed. Thereafter, the control unit 31 displays, when the maintenance work is resumed, the re-registered main item 52 of the maintenance work as shown on the upper screen 51 of FIG. 5.

The control unit 31 may perform, when the suspension process is performed, a notification process of notifying the worker who is able to perform the work that the work is suspended in addition to the display process shown in FIG. 5.

In addition, the control unit 31 may perform, when the suspension process is performed, an information sharing process of notifying an external entity that the work is suspended. The external entity is, for example, a system that manages the progress of the work, and can perform management of the progress based on the work suspension or the like.

In addition, the control unit 31 may determine, when the suspension process is performed, whether or not a step of the work procedure of the maintenance work to be suspended is a suspendable step. When the step is an unsuspendable step, the control unit 31 may cause the display unit 33 to display the fact.

The process shown in FIG. 4 is a display process related to attention displayed on the screen 51 when the maintenance work is started. When the maintenance work corresponding to the main item 52 is selected, the control unit 31 acquires the item of the maintenance work that is selected and set (step S11). After the execution of step S11, the control unit 31 determines whether or not the acquired maintenance work satisfies an attention-required condition (step S12). That is, in step S12, it is determined whether or not the acquired maintenance work is attention-required work that requires attention for the worker. The attention-required condition is, for example, a condition of whether the maintenance work is performed by the worker for the first time or whether the maintenance work is performed by the worker after a long time. The attention-required condition is not particularly limited to the above-described condition, and may be any condition.

In step S12, when it is determined that the attention-required condition is satisfied (step S12: Yes), the control unit 31 causes the display unit 33 to display the attention related to the worker (step S13). In step S12, when it is determined that the attention-required condition is not satisfied (step S12: No), or after the execution of step S13, the control unit 31 determines whether or not there is a change in the work procedure (step S14).

In step S14, when it is determined that there is a change in the work procedure (step S14: Yes), the control unit 31 causes the display unit 33 to display the attention related to the procedure (step S15). In step S14, when it is determined that there is no change in the work procedure (step S14: No), or after the execution of step S15, the control unit 31 determines whether or not the confirmation of the wear status of the tool used for the maintenance work is required (step S16). In step S16, the control unit 31 acquires the work-record data of the past maintenance work, calculates the period of use or the number of uses of the tool, and determines whether or not the confirmation is required based on a preset threshold value.

In step S16, when it is determined that the confirmation of the wear status of the tool is required (step S16: Yes), the control unit 31 causes the display unit 33 to display attention to confirm the wear status of the tool (step S17). In step S16, when it is determined that the confirmation of the wear status of the tool is not required (step S16: No), or after the execution of step S17, the control unit 31 ends the display process related to the attention.

As described above, the work assistance system 10 according to the present embodiment is understood as follows, for example.

A first aspect provides a work assistance system 10 that assists a worker in performing work, the work assistance system 10 including: a display unit 33 that displays a work procedure of the work; an input unit 34 that inputs progress of the work in accordance with the work procedure; and a control unit 31 that performs data process of recording the progress of the work based on an input of the input unit 34, in which the control unit 31 performs, when a suspension operation of suspending the work is input through the input unit 34, data process of recording the progress of the work before the suspension and performs suspension process of displaying, on the display unit 33, that the work is suspended, and resumes, when a resumption operation of resuming the work is input through the input unit 34, the data process of recording the progress of the work.

With this configuration, even if the maintenance work is suspended, the progress of the work can be recorded. Therefore, even if the maintenance work is resumed, the progress status of the work can be understood. Therefore, the worker can appropriately suspend and resume the work.

As a second aspect, in the work assistance system 10 according to the first aspect, the control unit 31 causes the display unit 33 to display a main item 52 indicating a work unit of the work and a sub-item 53 indicating a step of the work procedure of the work associated with the main item 52, and performs, when the suspension process is performed, a display process of hiding the sub-item 53 and displaying the main item 52.

With this configuration, the worker can explicitly understand whether the maintenance work is being performed or is suspended by visually recognizing the display unit 33.

As a third aspect, in the work assistance system 10 according to the first or second aspect, the control unit 31 performs, when the suspension process is performed, a notification process of notifying the worker who is able to perform the work that the work is suspended.

With this configuration, it is possible to notify the surrounding workers of the suspension of the maintenance work. Accordingly, the worker who is able to perform the work can resume the maintenance work and perform the work.

As a fourth aspect, in the work assistance system 10 according to any one of the first to third aspects, the control unit 31 performs, when the suspension process is performed, an information sharing process of notifying an external entity that the work is suspended.

With this configuration, it is possible to share information that the maintenance work is suspended. Therefore, for example, it is possible to manage the progress of the work in consideration of the suspension of the maintenance work.

As a fifth aspect, in the work assistance system 10 according to any one of the first to fourth aspects, the control unit 31 performs, when the work is attention-required work that requires attention for the worker, a display indicating that the work requires attention, on the display unit 33.

With this configuration, it is possible to prompt the worker to pay attention to the maintenance work.

### Reference Signs List

10: work assistance system
31: control unit
32: storage unit
33: display unit
34: input unit
51: screen
52: main item
53: sub-item

## Claims

1. A work assistance system that assists work performed by a worker, the work assistance system comprising:
a display unit that displays a work procedure of the work;
an input unit that inputs progress of the work in accordance with the work procedure; and
a control unit that performs a data process of recording the progress of the work based on the input from the input unit,
wherein the control unit
when a suspension operation of suspending the work is input through the input unit, performs a data process of recording the progress of the work before the suspension and also performs a suspension process of causing the display unit to display that the work is suspended, and
when a resumption operation of resuming the work is input through the input unit, resumes the data process of recording the progress of the work.

2. The work assistance system according to Claim 1,
wherein the control unit
causes the display unit to display a main item indicating a work unit of the work and a sub-item indicating a step of the work procedure of the work associated with the main item, and
performs, when the suspension process is performed, a display process of hiding the sub-item and displaying the main item.

3. The work assistance system according to Claim 1,
wherein the control unit performs, when the suspension process is performed, a notification process of notifying the worker who is able to perform the work that the work is suspended.

4. The work assistance system according to Claim 1,
wherein the control unit performs, when the suspension process is performed, an information sharing process of notifying an external entity that the work is suspended.

5. The work assistance system according to Claim 1,
wherein the control unit performs, when the work is attention-required work that requires attention for the worker, a display indicating that the work requires attention on the display unit.
